# EUROPÄISCHE PATENTSCHRIFT

(11) **EP 0 862 009 B1**
(45) Veröffentlichungstag und Bekanntmachung des Hinweises auf die Patenterteilung: **26.09.2001**
(21) Anmeldenummer: 98102351.8
(22) Anmeldetag: 11.02.1998
(51) Int. Cl.: F16L 37/084

(54) **Lösbare Steckverbindung mit Montageanzeige**
Releasable plug in coupling
Connecteur enfichable démontable

(30) Priorität: 01.03.1997 DE 19708377
(43) Veröffentlichungstag der Anmeldung: 02.09.1998
(73) Patentinhaber: A. Raymond & Cie, F-38028 Grenoble-Cédex (FR)
(72) Erfinder: Lesser, Hans-Jürgen, Dr., 79618 Rheinfelden (DE); Trede, Michael, 68170 Rixheim (FR)
(74) Vertreter: Kirchgaesser, Johannes, Dipl.-Ing.

(56) Entgegenhaltungen:
- EP-A- 0 505 930
- EP-A- 0 605 801
- US-A- 5 129 683
- US-A- 5 395 140

## Beschreibung

Die Erfindung bezieht sich auf eine lösbare Steckverbindung mit Montageanzeige zum Verbinden von Leitungen für flüssige und gasförmige Stoffe nach dem Oberbegriff des Anspruchs 1.

Bei einer durch die EP 0 505 930 B1 bekannten Steckverbindung dieser Art besteht das Anzeigeteil aus zwei an einem Flaggenteil gabelförmig angeformten, zueinander parallelen Stegen, welche in zwei gegenüberliegende Seitenschlitze der Gehäusewand tangential einführbar sind und im Aufnahmebereich der Halterippe zwei nach innen abstehende Ohren aufweisen, welche beim Einführen des Einsteckteils von der Halterippe nach außen weggedrückt werden. Die Ohren weisen ferner zum Gabelbügel hin jeweils einen Rasthaken auf, welche im eingesteckten Zustand des Anzeigeteils am Ende des Seitenschlitzes verhaken. Sobald die Gabelstege von der Halterippe auseinandergedrückt werden, lösen sich auch die Rasthaken aus den Längsschlitzen und das Anzeigeteil kann an der nach außen abstehenden Flagge zum Nachweis der Montage herausgezogen werden.

Bei diesem Anzeigeteil wird es als Nachteil empfunden, daß die nach außen abstehende Flagge vor wie auch nach der Montage stets die gleiche Position hat und erst durch Ziehen an der Flagge festgestellt werden kann, ob das Anzeigeteil sich lösen läßt und die Halterippe des Einsteckteils somit an den Rastkanten des Halteteils eingerastet ist.

Aufgabe der Erfindung ist es, das Anzeigeteil so zu gestalten, daß bei korrekter Montage der Steckverbindung die Vollzugsmeldung automatisch erfolgt, ohne daß der Monteur noch einen zusätzlichen Handgriff durchführen muß.

Diese Aufgabe wird nach der vorliegenden Erfindung dadurch gelöst, daß das Anzeigeteil aus in der Radialebenen V - förmig zusammengeführten, federnd zusammendrückbaren Stegen besteht, welche im eingedrückten Zustand des Anzeigeteils mit nach außen abstehenden Vorsprüngen in der Öffnung der Gehäusewand druckknopfartig verrastbar sind, wobei die Stege an ihrem aus der Öffnung vorstehenden Ende mit einer auffederbaren Lasche verbunden sind, welche an ihrem entgegengesetzten Ende an der Gehäusewand verankerbar ausgebildet ist.

Hierdurch wird auf einfache Weise erreicht, daß das Anzeigeteil nach seiner Verdrängung durch die Halterippe des Einsteckteils radial aus dem Aufnahmeraum herausspringt und sowohl für den Monteur als auch für nachfolgende Kontrolleure der Beweis für eine korrekte Montage sichtbar wird.

Zur Verankerung des Anzeigeteils am Steckgehäuse ist am freien Ende der Lasche zweckmäßigerweise eine Klemmschelle angeformt, welche in eine entsprechende umlaufende Nut in der Gehäusewand einsteckbar ist. Hierbei ist die Lasche zur Klemmschelle erfindungsgemäß so ausgerichtet, daß sie mit dem Anzeigeteil im entspannten Zustand radial nach außen absteht und im eingedrückten Zustand auf das Anzeigeteil eine radial nach außen gerichtete Kraft ausübt.

Um das Herausspringen des Anzeigeteils weiter zu unterstützen, kann dieses Anzeigeteil nach einem weiteren Merkmal der Erfindung beiderseits der Öffnung mit auf der Gehäusewand federnd aufliegenden Lappen abgestützt sein. Der druckknopfartige Verrastungseffekt läßt sich durch die Ausgestaltung des Anzeigeteils nach Anspruch 5 besonders einfach realisieren.

In der Zeichnung ist ein bevorzugtes Ausführungsbeispiel der Erfindung dargestellt, welches nachfolgend näher erörtert werden soll. Es zeigt
- Fig. 1: ein Steckverbindungsgehäuse mit montiertem Anzeigeteil im Schnitt nach Linie I-I in Fig. 2,
- Fig. 2: einen Querschnitt durch das Gehäuse gemäß Linie II-II in Fig. 1 mit eingerastetem Anzeigeteil,
- Fig. 3: das Anzeigeteil nach der Erfindung im ungespannten Zustand,
- Fig. 4: eine Teilansicht des Anzeigeteils nach Fig. 3 im gespannten Zustand in Montageposition über der Öffnung des Steckgehäuses vor dem Einrasten
- Fig. 5: ein Halteelement in Draufsicht in Montageposition vor dem Einführen in die Aussparung der Gehäusewand,
- Fig. 6: das gleiche Halteelement in Seitenansicht,
- Fig. 7: ein Steckverbindungsgehäuse mit montiertem Anzeigeteil beim Einführen eines Einsteckteils vor dem Einrasten der Halterippe und
- Fig. 8: die gleiche Montagesituation nach dem Einrasten der Halterippe mit Anzeige der korrekten Montage.

Die in den Figuren dargestellte Steckverbindung dient zur lösbaren Verbindung von Rohrleitungen und insbesondere von Kraftstoffleitungen im Kraftfahrzeugbau. Die Steckverbindung besteht hierbei aus einem zylindrischen Steckgehäuse **1,** einem rohrförmigen Einsteckteil **2** mit einer umlaufenden Halterippe **3** sowie einem mit dem Steckgehäuse **1** verbindbaren Anzeigeteil **4.**

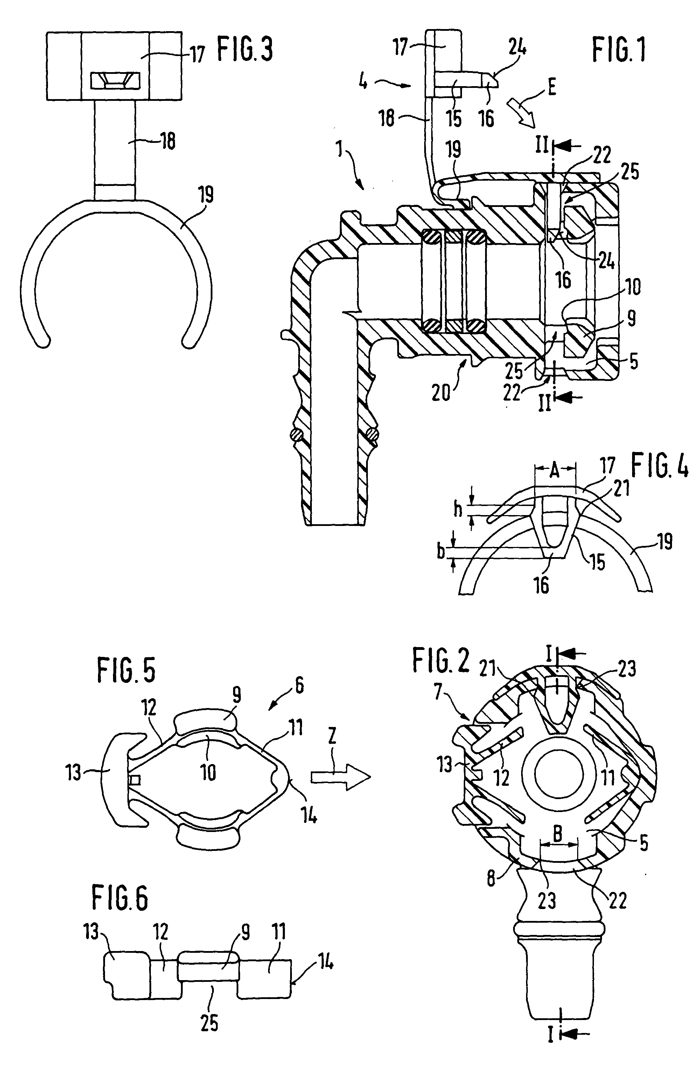

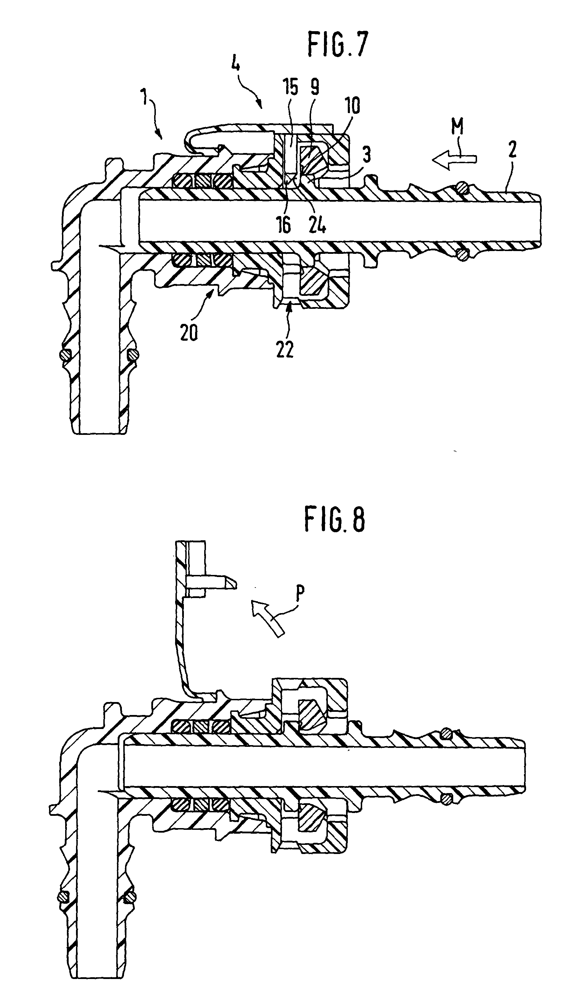

Das Steckgehäuse **1** weist in seinem Einsteckbereich einen Aufnahmeraum **5** für ein separates Halteelement **6** auf, welches von außen quer zur Gehäuseachse durch eine entsprechende Aussparung **7** in der Gehäusewand **8** in Richtung des Pfeiles **Z** eingeführt wird. Dieses Halteelement **6** besitzt, wie aus **Figur 5** und **6** ersichtlich, Stützkörper **9** mit radial nach innen gerichteten Rastkanten **10,** die dazu bestimmt sind, die Halterippe **3** nach dem Eindrücken des Einsteckteils **2** in das Steckgehäuse **1** zu hintergreifen und in Schließposition zu halten ( **Figur 8** ).

Die Stützkörper **9** sind hierbei nach der einen Seite über V-förmig zusammengeführte Federstege **11** und eine abgerundete Verbindungsstelle **14** untereinander verbunden und nach der anderen Seite über ebenfalls V-förmig zusammengeführte Federstege **12** mit einer Druckplatte **13** verbunden.

Im eingebauten Zustand des Halteelements **6** sind die beiden Federstege **11** mit ihrer abgerundeten Verbindungsstelle **14** an der Innenseite der Gehäusewand 8 in einer entsprechenden Mulde abgestützt, während die Druckplatte **13** aus der Gehäusewand **8** etwas übersteht. Zum Lösen der Steckverbindung drückt man die Druckplatte **13** in die Gehäusewand **8** hinein. Dadurch werden die Stützkörper **9** mit ihren Rastkanten **10** mittels der Federstege **11** und **12** nach außen bewegt und geben die Halterippe **3** frei, so daß das Einsteckteil **2** sich mühelos herausziehen läßt. Dieser Schließ- und Lösemechanismus ist im einzelnen in der EP 0 605 801 C1 beschrieben.

Das in den **Figuren 1, 3** und **4** dargestellte Anzeigeteil **4** besteht aus zwei V-förmig zusammengeführten, federnd zusammendrückbaren Stegen **15,** welche an der Unterseite eines dachförmig ausgebildeten Stützlappens **17** angeformt und an ihren freien Enden durch einen Quersteg **16** verbunden sind. Der Stützlappen **17** ist mittig mit einer Lasche **18** verbunden, an deren Ende eine Klemmschelle **19** angeformt ist. Diese Klemmschelle **19** ist im Innendurchmesser und in der Breite so ausgelegt, daß sie in eine entsprechende umlaufende Nut **20** in der Gehäusewand **8** einsteckbar und dort verankerbar ist.

Das Anzeigeteil **4** wird an der Gehäusewand **8** so verankert , daß die Lasche **18** mit dem Stützlappen **17** im entspannten Zustand radial nach außen absteht und nach dem Einschwenken des Anzeigeteils **4** in Richtung des Pfeiles **E** durch die aufgebrachte Biegespannung eine radial nach außen gerichtete Zugkraft P ausübt. Die Stege **15** besitzen zu diesem Zweck, wie aus **Fig. 2 und 4** ersichtlich, nach außen abstehende Vorsprünge **21,** welche im eingedrückten Zustand des Anzeigeteils **6** in der Öffnung **22** der Gehäusewand **8** verrastbar sind.

Diese Öffnung **22** befindet sich in Einsteckrichtung des Einsteckteils **2** hinter den Rastkanten **10** des Halteelements **6** und hat, wie in **Fig. 2** im unteren Bereich der Gehäusewand **8** bei der gleichen Öffnung **22** deutlich erkennbar ist, eine Breite **B,** welche dem äußeren Abstand **A** der beiden Federstege **15** dicht unterhalb des Stützlappens **17** entspricht.

Die Stützkörper **9** des Halteelements **6** besitzen an der gleichen Stelle unterhalb der Öffnung **22** eine Aussparung **25** entsprechend der Breite und Dicke der Federstege **15,** so daß diese in Einsteckrichtung hinter den Stützkörpern **9** bis in den Aufnahmebereich der Halterippe **3** einführbar ist.

Die Federstege **15** laufen von der Unterseite des Stützlappens **17** in einer Länge entsprechend der Wanddicke der Gehäusewand **8** zunächst etwa parallel zueinander und erweitern sich daran anschließend bis zu den Vorsprüngen **21** konisch , um dann V-förmig bis zum Quersteg **16** wieder zusammenzulaufen. Dieser Quersteg **16** ist entsprechend der radialen Erstreckung der Halterippe **3** in Einsteckrichtung des Einsteckteils **2** durch eine Fläche **24** abgeschrägt, wobei die Höhe **h** der konischen Erweiterung bis zum Vorsprung **21** der radialen Erstreckung **b** der Schrägfläche **24** entspricht.

Wenn nun das Einsteckteil **2,** wie aus **Figur 7** ersichtlich, in das Steckverbindungsgehäuse **1** in Richtung des Pfeiles **M** eingedrückt wird, werden zunächst die Rastkanten **10** des Halteteils **6** von der Halterippe **3** auseinandergedrückt. Beim weiteren Eindringen des Einsteckteils **2** stößt die Halterippe **3** dann gegen die Schrägfläche **24** des Querstegs **16** und schiebt diesen durch die radial wirkende Kraftkomponente mitsamt dem Anzeigeteil **4** nach außen. Die Federstege **15** werden dabei durch die Öffnung **22** elastisch zusammengedrückt, bis die Vorsprünge **21** den inneren Öffnungsrand **23** passiert haben. Sodann werden der Stützlappen **17** mit den Federstegen **15** aufgrund der durch die vorgespannten Laschen **18** freiwerdenden Zugkraft **P** nach außen gezogen. Der Stützlappen **17** erhebt sich hierbei wie eine Flagge sichtbar über das Steckverbindungsgehäuse **1** und zeigt damit an, daß das Einsteckteil **2** korrekt montiert ist ( **Figur 8).**

## Patentansprüche

1. Lösbare Steckverbindung mit Montageanzeige zum Verbinden von Leitungen für flüssige und gasförmige Stoffe, bestehend aus einem mit dem Ende der einen Rohrleitung verbindbaren, rohrförmigen Einsteckteil (2) mit einer umlaufenden Halterippe ( 3 ), einem mit dem Ende der anderen Rohrleitung verbindbaren, zylindrischen Steckgehäuse ( 1 ) mit einem Aufnahmeraum ( 5 ) für ein separates Halteelement ( 6 ) mit radial nach innen gerichteten, elastisch auffederbaren Rastkanten ( 10) zum Hintergreifen der Halterippe ( 3 ) nach dem Eindrücken des Einsteckteils ( 2 ) sowie aus einem Anzeigeteil ( 4 ), welches in Einsteckrichtung hinter den Rastkanten ( 10) des Halteelements ( 6 ) radial in den Aufnahmeraum (5) bis in den Aufnahmebereich der Halterippe ( 3 ) hineinragt und in Einsteckrichtung entsprechend der radialen Erstreckung der Halterippe ( 3 ) derart abgeschrägt ist, daß das Anzeigeteil ( 4 ) nach vollständigem Eindringen der Halterippe ( 3) von dieser verdrängt wird, **dadurch gekennzeichnet, daß** das Anzeigeteil ( 4) aus in der Radialebene V-förmig zusammengeführten, federnd zusammendrückbaren Stegen ( 15 ) besteht, welche am unteren Ende durch einen eine Schrägfläche ( 24 ) aufweisenden Quersteg ( 16 ) miteinander verbunden und im eingedrückten Zustand des Anzeigeteils ( 4 ) mit nach außen abstehenden Vorsprüngen ( 21 ) in einer Öffnung ( 22 ) der Gehäusewand ( 8 ) druckknopfartig verrastbar sind, wobei die Stege (15) an ihrem aus der Öffnung ( 22 ) vorstehenden Ende mit einer auffederbaren Lasche ( 18 ) verbunden sind, welche an ihrem entgegengesetzten Ende am Steckgehäuse (1) verankerbar ausgebildet ist.

2. Lösbare Steckverbindung nach Anspruch 1, **dadurch gekennzeichnet, daß** an dem freien Ende der Lasche ( 18) eine Klemmschelle ( 19) angeformt ist, welche in eine entsprechende umlaufende Nut ( 20 ) in der Gehäusewand ( 8) einsteckbar ist.

3. Lösbare Steckverbindung nach Anspruch 1 oder 2 , **dadurch gekennzeichnet, daß** die Lasche ( 18) mit dem Anzeigeteil ( 4 ) im entspannten Zustand radial nach außen absteht und im eingedrückten Zustand auf das Anzeigeteil ( 4 ) eine radial nach außen gerichtete Zugkraft ( P ) ausübt.

4. Lösbare Steckverbindung nach einem der Ansprüche 1 bis 3, **dadurch gekennzeichnet, daß** das Anzeigeteil ( 4 ) beiderseits der Öffnung ( 22 ) mit auf der Gehäusewand ( 8 ) federnd aufliegenden Lappen (17) abgestützt ist.

5. Lösbare Steckverbindung nach einem der Ansprüche 1 bis 4, **dadurch gekennzeichnet, daß** die Federstege (15) entsprechend der Breite ( B ) der Öffnung ( 22 ) und der Dicke der Gehäusewand ( 8 ) vom Lappen ( 17 ) aus zunächst parallel verlaufen und in dem sich nach innen anschließenden Bereich bis zu den Vorsprüngen ( 21 ) konisch auseinanderlaufen, wobei die Höhe ( h ) der konischen Erweiterung bis zum Vorsprung ( 21 ) gleich der radialen Erstreckung ( b ) der Schrägfläche ( 24) am unteren Quersteg (16) der Federstege ( 15 ) ist.

## Claims

1. A releasable plug connection with assembly indication for connecting lines for fluid and gaseous substances, comprising a tubular plug-in member (2) which has a holding rib (3) extending therearound and which can be connected to the end of the one pipeline, a cylindrical plug housing (1) which can be connected to the end of the other pipeline and which has a receiving space (5) for a separate holding element (6) with radially inwardly directed latching edges (7) which can be elastically sprung open for engaging behind the holding rib (3) after the plug-in member (2) has been pressed in, and an indicator member (4) which projects radially into the receiving space (5) into the receiving region of the holding rib (3) behind the latching edges (10) of the holding element (6) in the insertion direction and which is bevelled in the insertion direction corresponding to the radial extent of the holding rib (3) in such a way that after complete penetration of the holding rib (3) the indicator member (4) is displaced thereby, **characterised in that** the indicator member (4) comprises legs (15) which are brought together in a V-shape in the radial plane and which can be resiliently pressed together and which are connected together at the lower end by a transverse leg (16) having an inclined surface (24) and which in the pressed-in condition of the indicator member (4) can be latched press-stud-like with outwardly projecting projections (21) in an opening (22) in the housing wall (8), wherein at their ends projecting from the opening (22) the legs (15) are connected to a tongue (18) which can be sprung open and which is adapted to be anchorable at the opposite end thereof to the plug housing (1).

2. A releasable plug connection according to claim 1 **characterised in that** formed at the free end of the tongue (18) is a clamping clip (19) which can be inserted into a corresponding peripherally extending groove (20) in the housing wall (8).

3. A releasable plug connection according to claim 1 or claim 2 **characterised in that** the tongue (18) projects radially outwardly with the indicator member (4) in the relaxed condition and in the pressed-in condition applies a radially outwardly directed pulling force (P) to the indicator member (4).

4. A releasable plug connection according to one of claims 1 to 3 **characterised in that** the indicator member (4) is supported on both sides of the opening (22) with lugs (17) which bear resiliently against the housing wall (8).

5. A releasable plug connection according to one of claims 1 to 4 **characterised in that** the spring legs (15) initially extend parallel from the lug (17) correspondingly to the width (B) of the opening (22) and the thickness of the housing wall (8) and in the inwardly adjoining region conically diverge as far as the projections (21), wherein the height (h) of the conical enlargement as far as the projection (21) is equal to the radial extent (b) of the inclined surface (21) at the lower transverse leg (16) of the spring legs (15).

## Revendications

1. Raccord rapide détachable muni d'un dispositif indicateur visuel de montage destiné à raccorder des conduites véhiculant des substances liquides et gazeuses, se composant d'un élément tubulaire embrochable mâle (2), comportant une nervure de retenue périphérique (3), destiné à être monté sur l'extrémité d'une des conduites, d'un logement d'emmanchement femelle de forme cylindrique (1), destiné à être monté sur l'extrémité de l'autre conduite, définissant un logement de réception (5) pour un élément de retenue séparé (6) muni d'arêtes d'accrochage (10) capables de se déformer par cèdage élastique, orientées vers l'intérieur dans le plan radial, destinées à venir cramponner par derrière la nervure de retenue (3) après l'emmanchement par pression de l'élément embrochable mâle, ainsi que d'un dispositif indicateur visuel (4), qui fait saillie dans le plan radial, dans le sens de l'emmanchement, derrière les arêtes d'accrochage (10) de l'élément de retenue (6), dans le logement de réception (5) jusque dans la zone d'emprise de la nervure de retenue (3) et qui est biseauté dans le sens de l'emmanchement, en correspondance avec l'extension radiale de la nervure de retenue (3) dans des conditions telles que le dispositif indicateur (4) est repoussé vers l'extérieur par la nervure de retenue (3) après que celle-ci a été insérée à fond de course dans le logement, **caractérisé en ce que** l'élément indicateur (4) se compose de barrettes entretoises (15) orientées l'une vers l'autre dans le plan radial suivant une configuration en V, susceptibles d'être rapprochées l'une de l'autre par déformation élastique sous l'action d'un effort de serrage bilatéral, qui sont reliées ensemble au niveau de leur extrémité inférieure par une barrette entretoise transversale (16) comportant une face biseautée (24) et qui, lorsque le dispositif indicateur visuel (4) se trouve dans sa position d'insertion, est susceptible d'être accrochée en prise d'encastrement, à la façon d'un bouton-pression, au moyen de protubérances (21) faisant saillie vers l'extérieur, dans une ouverture (22) de la paroi (8) du logement, les barrettes entretoises (15) étant en l'occurrence munies, au niveau de leur extrémité faisant saillie dans l'ouverture (22), d'une languette (18) capable de céder par déformation élastique, qui est conçue de manière à pouvoir être ancrée dans le logement d'emmanchement femelle, au niveau de son extrémité opposée.

2. Raccord rapide détachable selon la revendication 1, **caractérisé en ce qu'**un collier de serrage est réalisé solidaire par formage de l'extrémité libre de la languette (18) et qu'il est destiné à venir s'insérer dans une rainure périphérique (20) ménagée en correspondance dans la paroi (8) du logement.

3. Raccord rapide détachable selon la revendication 1 ou 2, **caractérisé en ce que** la languette (18) portant l'élément indicateur visuel (4) fait saillie dans le plan radial vers l'extérieur lorsqu'elle n'est pas bridée en position et exerce sur l'élément indicateur visuel (4) un effort de traction P orienté de manière radiale vers l'extérieur lorsqu'elle est poussée en position d'insertion.

4. Raccord rapide détachable selon l'une des revendications 1 à 3, **caractérisé en ce que** l'élément indicateur visuel (4) prend appui de part et d'autre de l'ouverture (22) au moyen de pattes (17) qui viennent s'appliquer de manière élastique sur la paroi (8) du logement.

5. Raccord rapide détachable selon l'une des revendications 1 à 4, **caractérisé en ce que** les barrettes entretoises élastiques (15), en fonction de la largeur (B) de l'ouverture (22) et de l'épaisseur de la paroi (8) du logement, commencent par s'étendre, en partant de la patte (17), suivant une trajectoire parallèle puis, dans la zone qui fait suite vers l'intérieur, s'écartent suivant une trajectoire conique jusqu'au niveau des protubérances (21), la hauteur (h) de l'évasement conique jusqu'à la protubérance (21) étant en l'occurrence égale à l'extension radiale (b) de la face en biseau (24) de la barrette entretoise transversale inférieure (16) des barrettes entretoises élastiques (15).
